(19) Europäisches Patentamt
European Patent Office
Office européen des brevets

(11) Publication number: 0 335 396
A1

(12) # EUROPEAN PATENT APPLICATION

(21) Application number: 89105630.1

(22) Date of filing: 30.03.89

(51) Int. Cl.4: C07F 9/09 , C07C 101/30 , A61K 31/66

(30) Priority: 01.04.88 IT 2006988
01.04.88 IT 2007088
01.04.88 IT 2007188
18.04.88 IT 2022888
20.04.88 IT 2026088

(43) Date of publication of application:
04.10.89 Bulletin 89/40

(84) Designated Contracting States:
BE DE ES FR GB GR IT LU NL

(71) Applicant: MAGIS FARMACEUTICI S.p.A.
Via Cacciamali 34/36/38
I-25125 Brescia(IT)

(72) Inventor: Puricelli, Laura
Via Taramelli 7
I-25100 Brescia(IT)

(74) Representative: Gervasi, Gemma et al
NOTARBARTOLO & GERVASI Srl Viale
Bianca Maria 33
I-20122 Milan(IT)

(54) **Glycero-phosphoric and -diphosphoric acids derivatives of L-carnitine or L-carnitine esters.**

(57) Salts of glycerophosphoric and glycero-diphosphoric acids derivatives with L-carnitine or L-carnitine esters and pharmaceutical compositions containing then useful for treating cardiac disturbances, dislipemias and hyperlipoproteinemias.

EP 0 335 396 A1

Xerox Copy Centre

# GLYCERO-PHOSPHORIC AND -DIPHOSPHORIC ACIDS DERIVATIVES OF L - CARNITINE OR L - CARNITINE ESTERS

This invention relates to the salts of L - carnitine or of its esters, with 2-O-acetyl-glycero-phosphoric or -disphosphoric acids, the process for their preparation and pharmaceutical compositions which contain them.

More particularly the invention relates to the compounds of the following general formula:

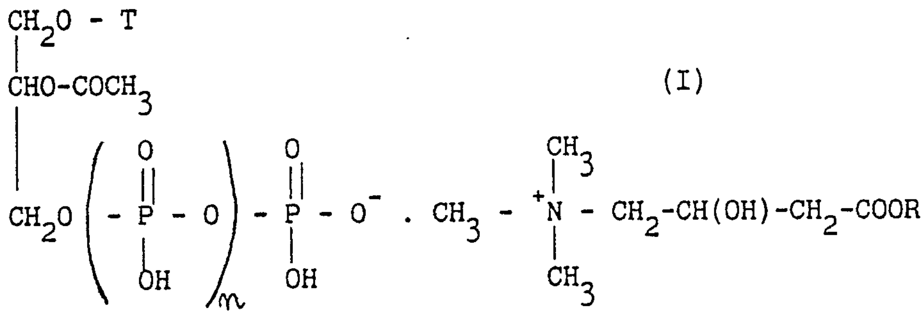

(I)

where R represents H or a $C_1$-$C_5$ alkyl radical, n is 0 or 1, T is H or $-COCH_3$ or a group:

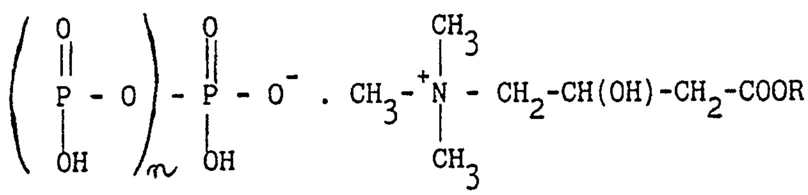

The compounds of the formulas (I) have proved useful in the treatment of cardiac disturbances, dislipemias and hyperlipoproteinemias.

The preparation process of these compounds is based on two basic reactions schemes respectively for the compounds of formula (I) wherein T is a phosphoric ester group and for the compounds of formula (I) wherein T is H or - $COCH_3$.

In the first case, starting from glycerol, through the reaction with two moles of $(C_6H_5)_3$ C Cl in presence of pyridine we obtain the compound:

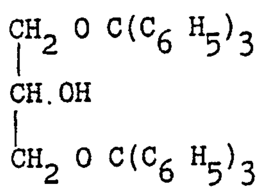

(II)

which is then reacted with acetic anhydride in presence of pyridine for obtaining the 2-acetyl derivative

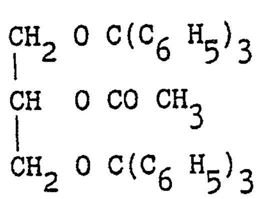

(III)

From this latter, through reaction with HBr in acetic acid 2-acetyl-glycerol (IV) is obtained.

The following step is reaction of (IV) with two moles of ClPO (O $C_6$ $H_5)_2$ in presence of pyridine thus

obtaining the compound:

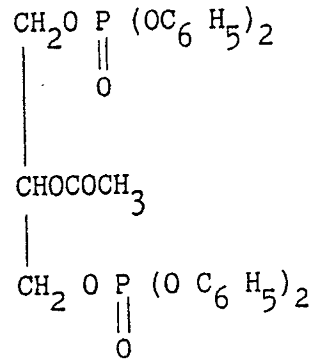

(V)

This compound is then reacted with Ba $(OH)_2$ in aqueous solution this obtaining the Ba salt, the reaction mixture containing the excess of $Ba(O H)_2$ is treated with gaseous $CO_2$ until it becomes neutral to the phenolphtaleine and the $BaCO_3$ is filtered off. The aqueous solution of the Ba salt is treated with $H_2SO_4$ thus obtaining the 2-acetyl-glycerol-1,3-disphosphate:

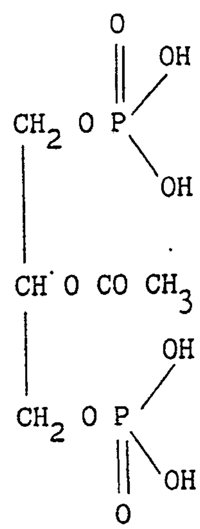

(VI)

In the case of the compounds of formula (I) wherein n = 0 the compound (VI) is directly salified in the ethyl alcohol with two moles of L-carnitine or its esters whereas in the case n = 1 the compound (VI) is further reacted with $H_3$ $PO_4$ in presence of pyridine and dicyclohexylcarboimide thus obtaining the compound:

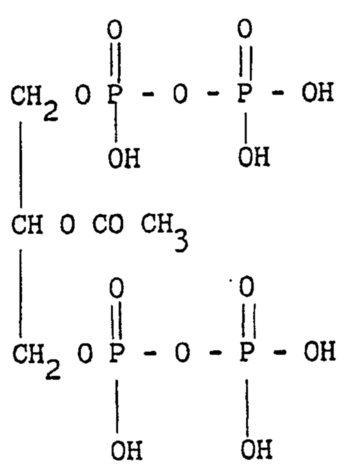

(VII)

which is then salified in ethyl alcohol with two moles of L -carnitine or its esters.

In the second case, i.e. compounds of formula (I) wherein T is H or $-COCH_3$, starting from the 1,2-isopropyliden-glycerol:

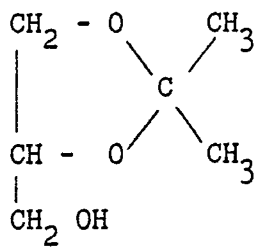

(VIII)

the reaction scheme is the following:

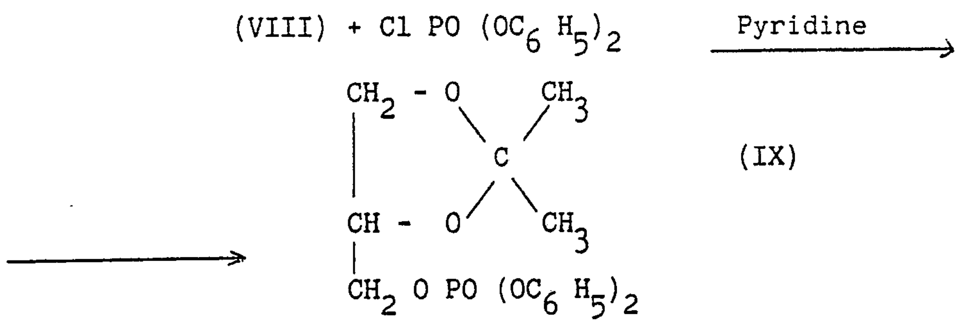


(IX)

The compound (IX) is reacted with Ba $(OH)_2$, $CO_2$ and $H_2$ $SO_4$ as above reported for the first case, thus obtaining the compound:

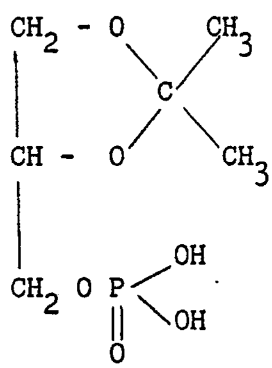

(X)

which hydrolized with HCl in aqueous solution, gives α-glycerophosphoric acid:

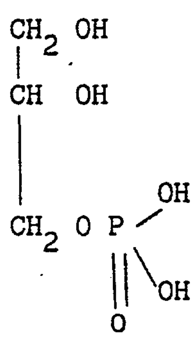

(XI)

In the case of compounds of formula (I) wherein T = - $COCH_3$, the compound (XI) is completely acetylated in positions 1 and 2 by using acetic anhydride in presence of pyridine.

In the case of compounds of formula (I) where T = H, the compound (XI) is at first made to react with Cl C ($C_6$ $H_5$)$_3$ in order to convert the-OH group in position 1 into the protected group -O C ($C_6$ $H_5$)$_3$, then an acetylation with acetic anhydride in presence of pyridine occurs in position 2, thereafter the hydrolysis of the group -OC($C_6$ $H_5$)$_3$ is carried out by the use of H Br thus restoring the -O H group.

The monoacetyl- and respectively diacetyl- derivative is then salified in ethanol solution with one mol of L - carnitine.

Finally, from the diacetyl derivative:

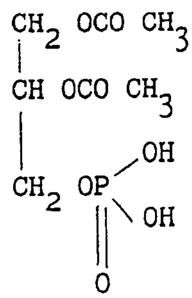

(XII)

it is possible to obatain the phosphoric acid derivative

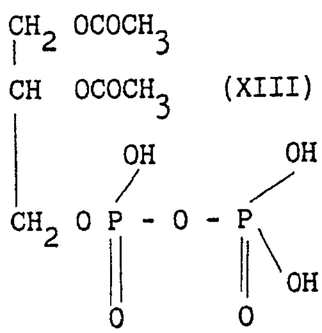

(XIII)

through

the reaction of (XII) with $H_3$ $PO_4$ + dicyclohexylcarboimide in presence of pyridine.

Compound XIII is then salified with 1 mole of L - carnitine. Compounds of the general formula (I) wherein T = H or -$COCH_3$ can be obtained in form of the optical isomers D, L or DL form by using in their preparation α-glycerophosphoric acid (XI) in D or L forms, which can be obtained by the procedure described by Beer, Fischer J. Biol. Che. 128 pg. 491 (1939) pag 135, 321 (1940).

The pharma-biological charcteristics of the compound according to the invention, namely its high activity and low toxicity, were evaluated with particular reference to acute toxicity, cardiokinetic activity, its effects in terms of modifying the lipoprotein state and its capacity to return cholesterol and triclyceride levels to normality.

The acute toxicity of the compound of general formula (I) was studied on the mouse by the Weil method [Weil C.S. Biometr. 8, 249 (1952)].

The $LD^{50}$ exceeds 2500 mg/kg.

The cardiokinetic effect was studied on the isolated rabbit heart by the Langerdorff method.

The test shows that the compound has a positive inotropic effect calculated 10 minutes after interrupting the anoxic period.

The effect of the new compound in terms of modifying the lipoprotein state and the plasma chlolesterol and triglyceride levels, altered by oral administration of olive oil, was studied in normally fed rats treated orally with 15 ml/kg of olive oil one hour before oral administration of the compound at 200 mg/kg doses.

The new compound proved able to return the triglyceride, cholesterol and the α, β and pre-β lipoprotein fraction levels to normal values.

EXAMPLE 1 - 2-acetyglycerol

9.21 of glycerol and 56 g of triphenylmethylchloride are mixed with 100 ml of anhydrous pyridine in a flask fitted with a stirrer, and heated until completely dissolved. The solution is cooled to ambient

temperature and 7.5 ml of acetic anhydride are added.

The mixture is allowed to stand for 12 hours and the solution then poured into 300 g of crushed ice, agitated until the ice has completely melted, acidified with hydrochloric acid and extracted with three 10 ml portions of chloroform.

The chloroform extracts are pooled, washed with an aqueous acid solution, dried with anhydrous sodium sulphate and evaporated to dryness under vacuum. The residue is dissolved in 200 ml of acetic acid. The solution is cooled to about 10° C, 36 ml of a solution of dry hydrobromic acid in acetic acid added and the mixture agitated for about 45 seconds.

The triphenylmethylbromide which forms during the reaction is separated by filtration, and the filtrate transferred into 500 ml of a 20% sodium chloride solution. The aqueous phase is extracted repeatedly with ethyl acetate, the organic phase is separated, dried with anhydrous magnesium sulphate and evaporated to dryness under vacuum. About 20 g product are obtained.

Spectral analyses confirm the structure.

| Elementary analysis | C | H |
|---|---|---|
| caluculated %<br>found %<br>M.W. 134.13 | 44.769<br>44.81 | 7.515<br>7.48 |

EXAMPLE 2 2-acetyl-glycero-1,3-diphosphate

300 ml of anhydrous piridine, 57.6 g of diphenylphosphoryl chloride and 13.42 g of 2-acetyl-glycerol are transferred into a 1000 ml flask fitted with a stirrer and protected from moisture.

The mixture is agitated for two days at ambient temperature. After this time, 200 ml of water are added under agitation, the mixture transferred into a rotary flask and evaporated to dryness under vacuum (bath temperature 45-50 C°). The residue obtained is dissolved in 250 ml of alcohol, 400 ml of water and 280 g of barium hydroxide (octahydrate) are added to the solution, and the mixture heated under agitation for 65 minutes from commencement of boiling.

When this time has elapsed, an energetic stream of carbon dioxide is fed into the solution until it becomes neutral to phenolphthalene.

The mixture is filtered through a filter prepared with a light bed of dicalite, and the filter washed with 3 x 50 ml portions of water.

10% sulphuric acid is slowly added to the aqueous solution until pH 6.0 is attained. It is left standing for two hours and then filtered.

The filtrate is evaporated to dryness under vacuum in a rotary flask (bath temperature 45-50° C).

The residue is dissolved in 300 ml of anhydrous ethyl alcohol, filtered, and the filter washed with three 50 ml portions of anhydrous ethyl alcohol.

300 ml of acetone are added slowly to the filtrate, the precipitate is filtered off and dried in an oven at 40° C under vacuum. Spectral analyses confirm the structure.

| Elementary analysis | C | H | P |
|---|---|---|---|
| calculated %<br>found %<br>M.W. 294.09 | 20.419<br>20.51 | 4.1<br>4.15 | 21.061<br>21.0 |

EXAMPLE 3 Glycerol 2-acetyl-1,3-bis(diphosphate)

2.95 g of 2-acetyl-glycero-1,3-diphosphate, 2.3 g of 85% phosphoric acid and 500 ml of pyridine are transferred into a 1 litre flask fitted with a stirrer.

It is agitated until a solution forms and 100 g of dicyclohexylcarboimide (D.C.C.) are then added. The mixture is agitated at 37° C for 5 days.

400 ml of water are added to the semisolid mixture, which is then agitated for 20 minutes and filtered.

The aqueous solution is extracted repeatedly with ether until pyridine is eliminated.

The filtered solution in reduced to 60 ml under vacuum at a temperature not exceeding 20° C.

The concentrated solution is passed through a column of Dowex-50 ion exchange resin (200-325 mesh in acid form) (length 24 cm x 4 cm diameter), and the column washed with water until the eluate is of neutral pH.

The separated fraction containing the diphosphoric derivative is dried by lyophilisation (chromatographic system ethanol: 1 M ammonium acetate solution 70: 30).

The residue is dissolved in absolute alcohol and pricipitated with 0° C ethyl ether.

The process of precipitation from alcohol with ether is repeated three times.

About 1.5 g of product are obtained.

Spectral analyses confirm the structure.

| Elementary analysis | C | H | P |
|---|---|---|---|
| caluculated %<br>found %<br>M.W. 454 | 13.21<br>13.2 | 3.1<br>3.51 | 27.31<br>27.3 |

EXAMPLE 4 L-carnitine 2-acetyl-glycero-1,3-bis(diphosphate)

91 g of glycerol 2-acetyl-1,3-bis(diphosphate) are transferred into a 500 ml flask containing 150 ml of absolute alcohol cooled to 0° C in which 32.26 g of L-carnitine have been dissolved.

300 ml of acetone precooled to 0° C are added to the solution, which is maintained at 0° C.

The precipitate which forms is filtered off dried in an oven under vacuum.

About 50 g of product are obtained.

Spectral analyses confirm the structure.

| Elementary analysis | C | H | N | P |
|---|---|---|---|---|
| calculated %<br>found %<br>M.W. 776.57 | 29.4<br>29.35 | 5.67<br>5.6 | 3.62<br>3.67 | 15.98<br>15.95 |

EXAMPLE 5

Using the procedure of Example 4, the L-carnitine methyl, ethyl, propyl and butyl ester derivatives are obtained.

EXAMPLE 6 L-carnitine 2-acetyl glycero-1,3-diphosphate

29.1 g of 2-acetyl glycero-1,3-diphosphate are dissolved in 200 ml of absolute ethyl alcohol, and when dissolved 32.26 g of L-carnitine are added.

The solution is evaporated to dryness under vacuum. About 61.6 g of product are obtained.

Spectral analyses confirm the structure.

| Elementary analysis | C | H | N | P |
|---|---|---|---|---|
| calculated %<br>found %<br>M.W. 616.48 | 23.37<br>23.25 | 6.81<br>6.82 | 4.55<br>4.50 | 10.08<br>10 |

EXAMPLE 7

Using the procedure of Example 6, the 2-acetyl glycero-1,3-diphophate of the methyl, ethyl, propyl, butyl and other esters of L-carnitine are obtained.

EXAMPLE 8 3-diphenylphosphoryl-1,2-isopropylene glycerol.

150 ml of anhydrous pyridine, 28.8 g of pure diphenylphosphoryl chloride and 13.216 g of ketal (II) are fed into a 500 ml moisture-tight flask fitted with a stirrer. The reaction mixture is kept two days at room temperature.

When the time has elapsed, 150 ml of water are added while stirring. The mixture is transferred into a rotary flask and evaporated to dryness under vacuum (bath temperature 45-50° C).

EXAMPLE 9 3-phosphoryl-1,2-isopropylene-glycerol

The residue obtained from Example 8, containing 3-diphenyl-phosphoryl-1,2-isopropylene glycerol and pyridine chloride, is dissolved in 100 ml of alcohol, 350 ml of water and 180 g of barium hydroxide (octahydrate) are added to the solution. The mixture is heated under stirring for 65 minutes (from the commencement of boiling). After this time, a strong carbon dioxide stream is fed into the solution until it becomes neutral to phenolphthalene.

The mixture is filtered through a filter prepared with a light bed of dicalite. The filter is washed with three 50 ml portions of water. The aqueous solution is extracted with ethyl ether to eliminate the phenol. The aqueous solution is reduced to 150 ml under vacuum in a rotary flask. An equal volume of anhydrous ethanol is added and the mixture left stirring for two hours.

The solution is filtered and the filter washed with small portions of 50% ethanol/water.

The mother liquors are pooled and 600 ml of anhydrous ethyl alcohol are slowly added. The barium salt is filtered off and the filter washed with ethyl alcohol and then with ether. About 20-21 g of product are obtained. The barium salt is dissolved in 150 ml of water and the solution pH corrected potentiometrically to 6.0-6.5 with a 10% $H_2SO_4$ solution. The mixture which forms is filtered. The filtrate is evaporated to dryness in a rotary flask under vacuum (bath temperature 45-50° C). About 13 g of product are obtained.

Spectral analyses confirm its structure.

| Elementary analysis: | C | H | P |
|---|---|---|---|
| calculated %<br>found %<br>M.W.212 | 33.95<br>33.65 | 6.1<br>6.2 | 14.62<br>14.50 |

EXAMPLE 10 α-glycerophosphate

21.5 g of phosphoryl isopropylene glycerol are dissolved in 150 ml of 0.1 N hydrochloric acid and the mixture left stirring for 6 hours at ambient temperature.

The hydrochloric acid is neutralised with 15 ml of 1 N sodium hydroxide. The solution is evaporated to

dryness in a rotary flask (bath temperature 45-50° C). The residue is dissolved in 200 ml of absolute alcohol and the solution filtered and evaporated to dryness. The residue is then washed with acetone to obtain about 17 g of α-glycero phosphate.

| Elementary analysis: | C | H | P |
|---|---|---|---|
| calculated %<br>found %<br>M.W. 172.08. | 20.94%<br>21.01 | 5.27<br>5.28 | 18.00<br>17.95 |

EXAMPLE 11 1,2-Di-O-acetyl-glycero-3-phosphate

11.52 g of glycerophosphate are dissolved in 50 g of anhydrous pyridine in a flask fitted with a stirrer, and the mixture heated moderately until completely dissolved. It is cooled to ambient temperature and 15 ml of acetic anhydride added. The mixture is left to stand for 12 hours after which the solution is poured into 200 g of crushed ice and the mixture stirred until the ice has dissolved. The precipitate which forms is filtered off, washed with acetone and dried in an oven. About 14 g of product are obtained.

Spectral analyses confirm the structure.

| Elementary analysis: | C | H | P |
|---|---|---|---|
| calculated %<br>found %<br>M.W. 256.14 | 32.82<br>32.85 | 5.114<br>5.2 | 12.09<br>12 |

EXAMPLE 12 L-carnitine 1,2-di-O-acetylglycerophosphate.

25.164 g of 1,2-di-O-acetyl glycerophosphate are dissolved in 200 ml of absolute alcohol. 16.13 g of L-carnitine are added. The solution is evaporated to dryness under vacuum. 41.29 g of product are obtained.

Spectral analyses confirm the structure.

| Elementary analysis: | C | H | N | P |
|---|---|---|---|---|
| calculated %<br>found %<br>M.W. 417 | 40.28<br>40.3 | 6.71<br>6.68 | 3.35<br>3.4 | 7.43<br>7.5 |

EXAMPLE 13

Using the procedure of Example 12, the 1,2-di-O-acetyl glycero phosphates of the methyl, ethyl, propyl, butyl and other esters of L-carnitine are obtained.

EXAMPLE 14 1,2-di-O-acetyl-glycero-3-diphosphate

2.561 g of di-acetyl-glycero-3-phosphate, 1.153 g of 85% phosphoric acid and 300 ml of pyridine are transferred into a 1 litre flask fitted with a stirrer. The mixture is agitated until a solution forms and 50 g of D.C.C. are then added. The mixture is agitated at 37° C for 5 days.

400 ml of water are added to the semisolid mixture, which is then agitated for 20 minutes and filtered. The aqueous solution is extracted repeatedly with ether until pyridine is eliminated. The filtered solution is reduced to 60 ml under vacuum at a temperature not exceeding 20 °C.

The concentrated solution is passed through a column of Dowex 50 ion exchange resin (200-325 mesh in acid form) (length 24 cm x 4 cm diameter), and the column washed with water until the eluate is of neutral pH. The separated fraction containing the diphosphoric derivative is dried by lyophilisation.

The residue is dissolved in absolute alcohol and precipitated with ethyl ether operating at 0 °C.

The process of precipitation from alcohol with ether is repeated three times. About 1.5 g of product are obtained.

Spectral analyses confirm the structure.

| Elementary analysis: | C | H | P |
|---|---|---|---|
| calculated %<br>found %<br>M.W. 336.12 | 25.092<br>25.1 | 4.198<br>4.2 | 18.428<br>18.1 |

EXAMPLE 15 L-carnitine di-O-acetyl-glycero-3-diphosphate

33.612 g of di-O-acetyl glycero-3-diphosphate are transferred into a 500 ml flask containing 100 ml of ethyl alcohol cooled to 0 °C in which 16.13 g of L-carnitine have been dissolved. 300 ml of acetone precooled to 0 °C are added to the solution, which is maintained at 0 °C. The precipitate which forms is filtered off and dried in an oven under vacuum. About 40 g of product are obtained.

Spectral analyses confirm the structure.

| Elementary analysis | C | H | N | P |
|---|---|---|---|---|
| calculated %<br>found %<br>M.W. 497.737 | 33.75<br>33.7 | 5.82<br>5.85 | 2.812<br>2.78 | 12.45<br>13.31 |

EXAMPLE 16

Using the procedure of Example 15, the 1,2-diacetyl-glycero-3-diphosphates of the L-carnitine methyl, ethyl, propyl and butyl esters are obtained.

EXAMPLE 17 1-triphenylmethyl-2-acetyl-glycero-3-phosporic acid

11.52 g of α-glycerophosphoric acid and 19.32 g of triphenylmethyl chloride are mixed with 50 ml of anhydrous pyridine in a flask fitted with a stirrer, and the mixture heated until completely dissolved.

It is cooled to ambient temperature and 7.5 ml of acetic anhydride added. The solution is left to stand for 12 hours after which it is poured into 200 g of crushed ice and stirred until the ice has completely dissolved, the precipitate which forms being filtered off and dried.

It is mashed in 200 ml of ether. The insoluble part is filtered off and dissolved under hot conditions in 200 ml of absolute ethanol, the solution is decolorised with carbon, cooled, 200 ml of acetone added and the solution allowed to crystallize. The product is filtered off and dried in an oven. 12 g of product are obtained.

| Elementary analysis: | C | H | P |
|---|---|---|---|
| calculated %<br>found %<br>M.W. 456. | 63.15<br>63.20 | 5.5<br>5.55 | 6.8<br>6.75 |

EXAMPLE 18 2-acetyl-glycero-3-phosphoric acid

A solution of 46 g of 1-triphenylmethyl-2-acetyl-glycero-3-phosphoric acid is dissolved under hot conditions in 200 ml of acetic acid. The solution is cooled to about 10 °C and 18 ml of a solution of dry hydrobromic acid in acetic acid are added and the mixture is stirred for about 45 seconds.

The triphenylmethylbromide which forms during the reaction is separated by filtration and the filtrate transferred immediately into 500 ml of cold water. The solution obtained is extracted repeatedly with ether. The aqueous phase which separates is evaporated to dryness under vacuum (bath temperature 40-45 °C).

The residue is taken up in 100 ml of 95% ethanol and heated until dissolved, the solution filtered and allowed to cool to 10 °C, and 100 ml of acetone are slowly added to the solution. The precipitate which forms is filtered off and dried in an oven to obtain about 30 g of product.

Spectral analyses confirm the structure.

| Elementary analysis: | C | H | N | P |
|---|---|---|---|---|
| calculated %<br>found %<br>M.W. 375.307 | 38.4<br>38.6 | 6.93<br>6.9 | 3.732<br>3.7 | 8.264<br>8.18 |

EXAMPLE 20

Using the procedure of Example 19, the 2-0-acetyl-glycero-phosphates of the L-carnitine methyl, ethyl, propyl, butyl and other esters are obtained.

**Claims**

1) Glycero-phosphoric and -diphosphoric acids derivatives of L-carnitine or L-carnitine esters, of formula:

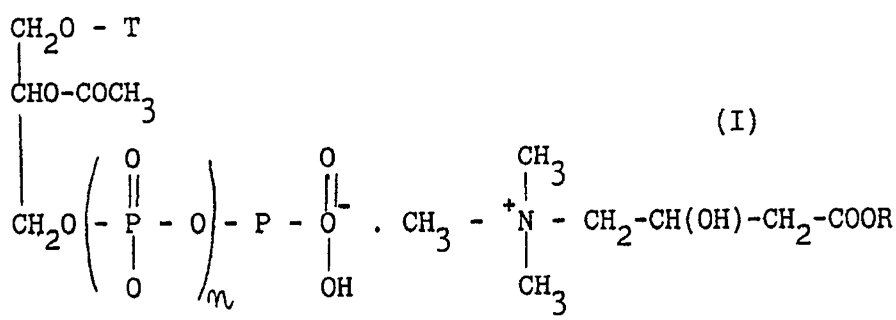

(I)

where R represents H or a $C_1$ -$C_5$ alkyl radical, n is 0 or 1, T is H or -$COCH_3$ or a group:

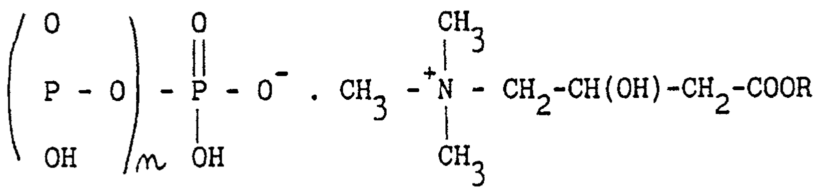

2) Pharmaceutical compositions for treating cardiac malfunctions, hyperlipoproteinemia and dyslipemia, comprising the compound claimed in claim 1 in a therapeutically effective quantity of between 30 and 2000 mg in stepped doses 1 or 2 times per day, in association with pharmacologically acceptable supports and adjuvants.

3) Pharmaceutical compositions as claimed in claim 2, for oral and intramuscular administration.

4) A process for preparing the compounds of formula I, wherein T is a phosphoric ester group, which comprises the following steps:

a) glycerol is made to react with two moles of $(C_6H_5)_3$ C Cl in presence of pyridine thus obtaining the compound:

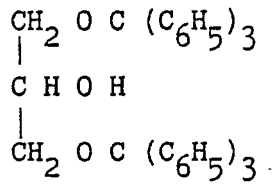

(II)

b) compound (II) is treated with acetic anhydride in presence of pyridine for obtaining the 2-acetyl-derivative (III);

c) from the 2-acetyl derivative (III) through reaction with HBr in acetic acid, 2-acetyl-glycerol (IV) is obtained;

d) 2-acetyl-glycerol (IV) by reacting with two moles of Cl PO $(OC_6H_5)_2$ in presence of pyridine is converted into the compound 2-acetyl-glycero-1,3 bis (diphenyl phosphate), which is then reacted with Ba-$(OH)_2$ in aqueous solution;

e) the reaction mixture containing the Ba salt and excess of $Ba(OH)_2$ is then treated with $CO_2$ and Ba $(CO_3)$is filtered off, the Ba salt in solution is treated with $H_2SO_4$ thus obtaining the 2-acetyl-glycerol-1,3-diphosphate (VI);

f) directly salifying the compound (VI) with two moles of L-carnitine or its esters for obtaining compounds wherein n = 0, or, when n = 1:

g) the compound VI is further reacted with $H_3PO_4$ in presence of pyridine and dicyclohexyl carboimide and the obtained compound:

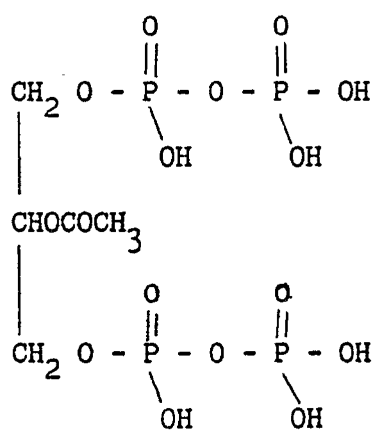

is salified with two moles of L-carnitine or its esters.

5) A process for preparing the compounds of formula I wherein T is $-COCH_3$, starting from α-glycerophosphoric acid, which comprises the following steps:

a) α-glycerophosphoric acid is completely acetylated with acetic anhydride in presence of pyridine and then, for obtaining compounds wherein T = $-COCH_3$ and n = 0, is salified with L-carnitine or its esters, or when n = 1:

b) the completely acetylated α-glycerophosphoric acid is reacted with $H_3 PO_4$ and dicyclohexylcarboimide in presence of pyridine, in order to obtain 1,2 diacetyl-3-diphosphoric acid which is then salified with L-carnitine.

6) A process for preparing the compounds of formula (I) wherein T = H, starting from a α-glycerophosphoric acid, which comprises the following steps:

a) in the α-glycerophosphoric acid the OH in position 1 is protected through reaction with Cl $C(C_6 H_5)_3$ and then acetylation is carried out in position 2;

b) restoring OH group in position 1 by treatment of reaction product of step a) with HBr

c) salifying the 2-acetyl-glycerol-3-phosphate with L-carnitine or its esters.

European Patent Office

# EUROPEAN SEARCH REPORT

Application Number

EP 89 10 5630

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-M- 6 345 (ETABLISSEMENTS FEVRIER, DECOISY, CHAMPION)<br>* Whole document *<br>--- | 1-3 | C 07 F 9/09<br>C 07 C 101/30<br>A 61 K 31/66 |
| A | EP-A-0 167 115 (MAGIS FARMACEUTICI S.p.A.)<br>* Whole document *<br>--- | 1-3 | |
| A | GB-A-2 045 612 (NIPPON SHOJI KAISHA LTD)<br>* Whole document *<br>----- | 1-3 | |
| | | | TECHNICAL FIELDS SEARCHED (Int. Cl.4) |
| | | | C 07 F 9/00<br>C 07 C 101/00<br>A 61 K 31/00 |

The present search report has been drawn up for all claims

| Place of search | Date of completion of the search | Examiner |
|---|---|---|
| THE HAGUE | 02-06-1989 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)